# EUROPEAN PATENT APPLICATION

(11) **EP 2 977 393 A1**
(43) Date of publication of application: **27.01.2016**
(21) Application number: 15177396.7
(22) Date of filing: 17.07.2015
(51) Int. Cl.: C08G 18/64, C08G 18/80, C09D 101/18, C08G 18/28, C09D 175/04, C08L 1/18

(54) **EXTREMELY FAST DRYING URETHANE-CELLULOSE COATING SYSTEM FOR APPLICATIONS IN POROUS AND THERMOPLASTIC MEDIA**

(30) Priority: 24.07.2014 BR 102014018191
(71) Applicant: Companhia Nitro Química Brasileira, 08090-000 São Paulo - SP (BR)
(72) Inventor: DE CARVALHO FIDALE, Ludmila, 01410-000 São Paulo, SP (BR); ALBIO, Calvete Rotta, 01241-001 São Paulo, SP (BR); HUGO, Wizenberg, 01239-020 São Paulo, SP (BR); OSCIMAR, Giacometti Torres, 03405-040 São Paulo, SP (BR); REGINALDO, Faichel da Silva, 03385-090 São Paulo,SP (BR)
(74) Representative: Cabinet Plasseraud

(57) **Abstract**

The present invention starts from a nitrocellulose-based thermoplastic and generates a urethane-cellulose system that makes it possible to obtain varnishes and coatings with chemical resistance and thermal stability that maintain their polymer characteristics, without alteration of the substratum. The system generated is based on the reaction of nitrocellulose in solution and monofunctional isocyanates and shows the advantage of reducing the permeability of the dry film.

## Description

### FIELD OF THE INVENTION

Starting from a nitrocellulose-based thermoplastic, a urethane-cellulose system is generated that makes it possible to obtain varnishes and coatings with chemical resistance and thermal stability that maintain its polymer characteristics, without alteration of the substratum. The system generated starts with the reaction of nitrocellulose in solution and monofunctional isocyanates and offers the advantage of diminishing the permeability of the dry film.

### BACKGROUND OF THE INVENTION

The present invention has the objective of introducing a system known as "1 K" for use on metal surfaces, based on wood or thermoplastics, using the nitrocellulose-isocyanate system in highly polar solvent medium.

The varnish/coating systems currently available make use of polyamide resins or acrylic urethane systems, whose disadvantages are the drying of the inks and varnishes involved in the systems mentioned.

For example, document WO 2010/0272968 describes a urethane and nitrocellulose-based ink for graphical applications, where diamine resins of high molecular weight must be used as the starting material. Although representing a big step forward, this document is still restricted to a particular type of resin and amine.

Document US 4,284,751, in turn, discloses a urethane-nitrocellulose-based sealant that adheres to glass surfaces and makes use of silicones.

Document US 4,752,502 now discloses an ink for roadway demarcation that shows fast drying. Despite disclosing a fast-drying urethane-nitrocellulose-based ink, this document does not concern any other type of surface, it being restricted to roadway surfaces.

Document US 5,556,925 discloses a printing ink for laminates in which there is the formation of a prepolymer, which is later reacted to form the system in urethane-nitrocellulose. This document does not disclose nor suggest the concept of forming varnish.

Document US 6,506,823, in turn, turns to the formation of a nitrocellulose-based coating/varnish aiming at a system with low VOC generation. However, the teachings of this document disregard alternatives for fast drying.

Now the present invention works with the formation of a film on any type of surface and starts from the nitrocellulose formation reaction with isocyanate from hydroxyl groups.

### DESCRIPTION OF THE INVENTION

The present invention has the objective of applying a system known as 1 K to metal, aluminum, wood-based, solid, agglomerate and reconstituted, or thermoplastic, polyethylene (PE), high or low density, torsional or metallized or bi-oriented (BOPP) polypropylene (PP), polyester, polyethylene terephthalate (PET), homopolymer or suspension-type vinyl polymer (PVC) surfaces; with or without electric (corona), thermal or chemical treatment, using a nitrocellulose-isocyanate system in highly polar solvent medium.

The varnish in accordance with the present invention is an alternative to the systems employed today, which use polyamide resins or acrylic urethane systems. The varnish in accordance with the present invention is also a system advantageously biodegradable and of high compatibility.

Polyamides show total compatibility in pure NC (nitrocellulose) and NC/PU (nitrocellulose-urethane) systems, in contrast to acrylic systems that show themselves incompatible with both pure NC and NC/PU systems, besides impairing the process speed.

Compatibilities are encountered in alkyd and polyester systems when in contact with pure NC or NC/PU.

The use of nitrocellulose-based urethane varnishes has its chemical beginning based on the reaction of the isocyanate group with free hydroxyls present in the nitrocellulose molecule, it becoming, in this case, a reactive polyol in organic polar solvent medium.

These varnishes possess the characteristic of having high molecular weight, show fast drying and, depending on the solvents used as solubilization medium, they could be free of or have low VOC.

The advantage of using nitrocellulose is its compatibility with isocyanate monomers, both aromatic and aliphatic, and their derivatives.

The advantage of urethane-nitrocellulose systems is the reduction of the permeability of the dry film, by means of neutralization of the residual hydrophilic groups.

The speed of drying and the ease of use lead to considering nitrocellulose-based urethane varnish an advantage in terms of application and time in the automobile repainting, wood and graphic arts fields.

The fact that nitrocellulose solution, urethanized or not, has a low content of polymer solids is considered an advantage in the graphic arts, since there is no formation of a thick layer on the substratum and, though being a low solid content system, it achieves high quality printing, because the pigments are highly compatible. Thus, mechanical application systems, which require that thin layers be transferred to the substratum, show good printing results.

The 1K nitrocellulose-urethanized system possesses a high degree of transference to the substratum and also ease of cleaning the equipment, considering that the products are highly soluble in solvents commonly used in the ink industry.

Additionally, nitrocellulose is a biodegradable product obtained from raw materials of renewable and nontoxic origin, such as cotton linter cellulose and wood cellulose from reforestation, or not.

Figure 1 shows the generic reaction of isocyanate with hydroxyl, and notes the unsaturated initial molecule and the addition with hydrogen donors, without the formation of byproducts.

Starting from an aromatic isocyanate of toluene diisocyanate (TDI), diphenylmethane diisocyanate (MDI), isophorone diisocyanate (IPDI) and hexane diisocyanate (HDI) type and nitrocellulose, the product in accordance with the present invention is obtained.

A solvent is used as reagent, such as glycols of the monoethylene glycol (MEG), diethylene glycol (DEG), propylene glycol, dipropylene glycol (DPG), triethylene glycol (TEG), MPdiol, 1,4-butanediol, 1,6-hexanedionol, tripropylene glycol (TPG) type, glycolic ethers of the type: monoethylene glycol methyl ether, monoethylene glycol ethyl ether, propylene glycol methyl ether, diethylene glycol methyl ether, triethylene glycol methyl ether, propylene glycol methyl ether, dipropylene glycol methyl ether, tripropylene glycol methyl glycolic ether and other ethers.

This reaction of the hydroxyl group with the isocyanate group occurs in solvent medium of organic acetate type totally free of humidity or any contamination with proton donor solvents. The product formed by this reaction has the advantage of forming film on surfaces of high electrostatic attraction, such as metal surfaces, besides the highest speed in terms of drying when compared with conventional varnishes.

Nitrocellulose is compatible with both aromatic and aliphatic isocyanates and their derivatives.

Aliphatic isocyanates are preferably used when the substratum or the varnish are directly affected by the outside environment, e.g., light, ultraviolet rays, solar light or any action of direct exposure to light beams.

Aromatic isocyanates are preferably used in inside systems or systems that will not have direct exposure to light, solar rays, ultraviolet light or any presence of light beams.

### DETAILED DESCRIPTION OF THE INVENTION

The present invention uses aromatic isocyanates such as toluene diisocyanate trimers, toluene diisocyanate adducts with polyols such as trimethylolpropane and diphenylmethane diisocyanate resins.

The nitrocellulose used in the present invention possesses a nitrogen content between 10.8% and 12.3%.

The most suitable nitrocellulose viscosity is in the range of ½ second, ¼ second, 5-6 seconds, 18-25 seconds and 10-15 seconds.

The viscosity methodology used is ASTM D301-95 (Standard Test Methods for Soluble Cellulose Nitrate).

High viscosity nitrocellulose of the ½ second and 5-6 seconds type produces inks/coatings/varnishes of low solid content and low thickness.

Low viscosity nitrocellulose, with lower viscosity than the viscosities mentioned above, produces higher solid content than the previous ones, of ½ second and 5-6 seconds, such as NC of 18/25 seconds and 10-15 seconds.

In the present invention, it works in both the high viscosity and the low viscosity range.

Normally, catalysts are used to promote the reaction between isocyanates and hydroxyls, the most used being based on bismuth, zinc, tin, potassium, cobalt and zirconium, of 2-ethyl hexanoate type, in the form of an ester.

The characteristic reaction of isocyanates with hydroxyls occurs by an addition mechanism, where the double bond existing between the carbon atom and the nitrogen atom, both characteristic of the isocyanate group, is broken, and a hydrogen atom, originating from the proton donor group, directly bonds to the nitrogen, forming a typical urethane bond.

These reactions occur with proton donor groups, such as primary amino, secondary amino, primary alcohol, secondary alcohol, tertiary alcohol, glycols, glycol esters, polyglycols, glycolic polyethers, besides other compounds that are proton donors.

In this specific case, of the reaction of an aromatic type isocyanate with the nitrocellulose molecule, there is the same mechanism described above, only differing due to the fact that the polyol used is a natural polymer composed only of hexoses, more specifically of glucose, chemically modified through direct partial esterification of the hydroxyl groups with nitro groups, leaving still free hydroxyl groups, which are used to react with the isocyanate.

The modification of nitrocellulose with a prepolymer derived from isocyanate results in a still thermosensitive molecule, however with reduced permeability, once part of its free hydroxyls has reacted with a prepolymer that contains free isocyanate groups, through urethane bond (which is insoluble and hydrophobic). To the extent to which the number of urethane bonds in the nitrocellulose polymer chain increases, this becomes more insoluble and more hydrophobic, until the polymer becomes thermoset, insoluble in organic solvents. It is worth emphasizing that, for the effects of the present invention, the hydroaffinity property was determined in a qualitative way.

Table 1, below, shows the types of nitrocellulose /isocyanate/solvents and their level of inclusion in molar terms.

**Table 1: NCPU 1K - plasticizer**

| Characterization | Unit | NC solution (27% solids) | TDI / NC | IPDI / NC | HDI / NC | MDI / NC |
|---|---|---|---|---|---|---|
| Viscosity | cP | 633 | 2400 | 3374 | 1800 | 2850 |
| Solid content | % | 27 | 34.5 | 36 | 35 | 36 |
| Density | g/mL | 1.04 | 1.06 | 1.08 | 1.06 | 1.06 |
| H2O content | % | 0.3 | 0.34 | 0.28 | 0.3 | 0.32 |
| Acidity | mg of KOH/mg | | 0.8 | 0.6 | 0.8 | 0.6 |
| Color | Gardner | 1.3 | 1.1 | 6.2 | 6 | 10 |
| Hardness | Pencil | 3H | 4H | H | N/A | N/A |
| Adherence | Degree | 3 | 2 | 1 | N/A | N/A |
| Chemical resistance | Ethyl acetate | 0 | 1 | 0 | 0 | 1 |
| | MEK | 0 | 0 | 1 | 0 | 0 |
| | Butyl glycol | 3 | 3 | 2 | 2 | 3 |
| | Xylol | 3 | 3 | 3 | 3 | 3 |
| TACK | seconds | 10 | 9 | 10 | 10 | 9 |
| Brightness | ub | 24 | 30.6 | 26 | N/A | N/A |

Considering that hydrophobicity is an extremely important property for the effect of the present invention and that, to the extent that the number of urethane bonds in the nitrocellulose polymer chain is increased, this becomes more insoluble and more hydrophobic; the paragraph below discusses the chemical basis of this property in the sphere of the present invention. Figure 2 shows the proposed structure for the urethane-nitrocellulose system.

As mentioned above, the reaction with a monofunctional isocyanate prepolymer gives rise to a still thermosensitive polymer whose dry film has reduced permeability, mainly if compared with the permeability of an untreated nitrocellulose film. In this latter, there are many hydrophilic groups resulting from the free residual hydroxyl groups, once the esterification with nitro groups is partial. These data can be experimentally verified by observing the brightness of the film, the depth of the image that is obtained or, in short, its reflection. When examining the facts relating to the greater hydrophobicity of the film, it is considered that the increase of urethane bonds leads to a reduction of the hydrophilic groups, represented for residual free hydroxyls of the nitrocellulose. There will also be an increase of viscosity to the extent that the level of blockage of the hydroxyl groups increases, until insolubility is reached, the molecular size of a thermoset polymer having then been reached.

The isocyanate prepolymer being linear and monofunctional, the flexibility of the film is achieved directly, without the necessity of using external plasticizers, so common among the formulators of nitrocellulose varnishes, pure or combined, with other film formers. Internal plastification allows flexibility to be achieved in the dry film as an inherent property of the polymer, it not taking an artificial form of an external plasticizer only mixed into the varnish.

### EXAMPLES

### 1.TDI, HDI AND IPDI GLYCOL ETHER

**Table 2: Results for NCPU 1K - plasticizer**

| Characterization | Unit | NC solution (27% solids) | TDI /NC | IPDI / NC | HDI /NC | MDI /NC |
|---|---|---|---|---|---|---|
| Viscosity | cP | 633 | 2400 | 3374 | 1800 | 2850 |
| Solid content | % | 27 | 34.5 | 36 | 35 | 36 |
| Density | g/mL | 1.04 | 1.06 | 1.08 | 1.06 | 1.06 |
| H2O content | % | 0.3 | 0.34 | 0.28 | 0.3 | 0.32 |
| Acidity | mg of KOH/mg | | 0.8 | 0.6 | 0.8 | 0.6 |
| Color | Gardner | 1.3 | 1.1 | 6.2 | 6 | 10 |
| Hardness | Pencil | 3H | 4H | H | N/A | N/A |
| Adherence | Degree | 3 | 2 | 1 | N/A | N/A |
| Chemical resistance | Ethyl acetate | 0 | 1 | 0 | 0 | 1 |
| | MEK | 0 | 0 | 1 | 0 | 0 |
| | Butyl glycol | 3 | 3 | 2 | 2 | 3 |
| | Xylol | 3 | 3 | 3 | 3 | 3 |
| TACK | seconds | 10 | 9 | 10 | 10 | 9 |
| Brightness | ub | 24 | 30.6 | 26 | N/A | N/A |

### 2. MDI AND ETHER AND HDI WITH ETHER

**Table 3: Results for NCPU 1K - plasticizer**

| Characterization | Unit | NC solution (27% solids) | TDI / NC | IPDI / NC | HDI / NC | MDI / NC |
|---|---|---|---|---|---|---|
| Viscosity | cP | 633 | 2400 | 2800 | 3640 | |
| Solid content | % | 27 | 34.5 | 36 | 35 | |
| Density | g/mL | 1.04 | 1.06 | 1.08 | 1.05 | |
| H2O content | % | 0.3 | 0.34 | 0.3 | 0.3 | |
| Acidity | mg of KOH/mg | | 0.8 | 0.6 | 0.8 | |
| Color | Gardner | 1.3 | 1.1 | N/A | N/A | |
| Hardness | Pencil | 3H | 4H | N/A | N/A | |
| Adherence | Degree | 3 | 2 | N/A | N/A | |
| Chemical resistance | Ethyl acetate | 0 | 1 | 0 | 0 | |
| | MEK | 0 | 0 | 0 | 0 | |
| | Butyl glycol | 3 | 3 | 3 | 2 | |
| | Xylol | 3 | 3 | 3 | 3 | |
| TACK | seconds | 10 | 15 | 15 | 15 | |
| Brightness | ub | 24 | 30.6 | 30 | 30 | |

### RESULTS

Hardness: 6B - 5B - 4B - 3B - 2B - B - HB - F - H - 2H - 3H - 4H - 5H - 6H - 7H
Degree of Adherence: 0 - 1 - 2 - 3 - 4 (0 = excellent / 4 = very bad)
Chemical resistance to specific solvents: 3 resists / 0 does not resist

Although the present invention has been described mainly with reference to the above examples, it is contemplated that the sphere of the invention includes the preparation of other equivalent systems. The above examples must be understood as not limiting the varnishes that can be prepared in accordance with the present invention and do not restrict the scope of the invention.

## Claims

1. Extremely fast urethane-cellulose coating system **characterized in that** it consists of a product of a reaction between a cellulosic derivative and a monofunctional urethane derivative.

2. Coating system in accordance with claim 1, **characterized in that** the monofunctional urethane derivative is an aromatic isocyanate of the toluene diisocyanate (TDI) and diphenylmethane diisocyanate (MDI) type or an aliphatic of isophorone diisocyanate (IPDI) and hexane diisocyanate (HDI) type.

3. Coating system in accordance with any one of the claims 1 or 2, **characterized in that** the solvent is a solvent such as glycols of the monoethylene glycol (MEG), diethylene glycol (DEG), propylene glycol (PG), dipropylene glycol (DPG), triethylene glycol (TEG), MPdiol, 1,4-butanediol, 1,6-hexanedionol, tripropylene glycol (TPG) type, glycolic ethers of the following types: monoethylene glycol methyl ether, monoethylene glycol ethyl ether, propylene glycol methyl ether, diethylene glycol methyl ether, triethylene glycol methyl ether, propylene glycol methyl ether, dipropylene glycol methyl ether, tripropylene glycol methyl glycolic ether and other ethers.

4. Coating system in accordance with any one of the claims 1 to 3, **characterized in that** aromatic isocyanates such as toluene diisocyanate trimers and toluene diisocyanate adducts with polyols such as trimethylolpropane and diphenylmethane diisocyanate resins are used.

5. Coating system in accordance with any one of the claims 1 to 4, **characterized in that** the nitrocellulose used possesses a nitrogen content between 10.8% and 12.3%.

6. Coating system in accordance with any one of the claims 1 to 5, **characterized in that** the nitrocellulose viscosity is in the range of ½ second, ¼ second, 18-25 seconds and 10-15 seconds.

7. Coating system in accordance with any one of the claims 1 to 6, **characterized in that** catalysts based on bismuth, zinc, tin, potassium, cobalt and zirconium are employed.

8. Use of the coating system as defined in any one of the claims 1 to 7 **characterized in that** it is like nitrocellulose-based urethane varnish for application on metal, aluminum, wood-based, solid, agglomerate and reconstituted, or thermoplastic, polyethylene (PE), high or low density, torsional or metallized or bi-oriented (BOPP) polypropylene (PP), polyester, polyethylene terephthalate (PET), homopolymer or suspension-type vinyl polymer (PVC) surfaces; with or without electric (corona), thermal or chemical treatment.

9. Use of the coating system as defined in any one of the claims 1 to 7 **characterized in that** it is like nitrocellulose-based urethane varnish for automobile repainting.

10. Use of the coating system as defined in any one of the claims 1 to 7 **characterized in that** it is like nitrocellulose-based urethane varnish for repainting wood.

11. Use of the coating system as defined in any one of the claims 1 to 7 **characterized in that** it is like nitrocellulose-based urethane varnish in graphic arts.

12. Use of the coating system as defined in any one of the claims 1 to 7 **characterized in that** it is like a hydrophobic urethane film.
